# EUROPÄISCHE PATENTSCHRIFT

(11) **EP 2 379 358 B1**
(45) Veröffentlichungstag und Bekanntmachung des Hinweises auf die Patenterteilung: **29.05.2013**
(21) Anmeldenummer: 09774620.0
(22) Anmeldetag: 09.11.2009
(51) Int. Cl.: B60J 7/22

(54) **WINDABWEISER**
WIND DEFLECTOR
DEFLECTEUR DE VENT

(30) Priorität: 21.01.2009 DE 102009005442
(43) Veröffentlichungstag der Anmeldung: 26.10.2011
(73) Patentinhaber: Webasto AG, 82131 Stockdorf (DE)
(72) Erfinder: KOHOUT, Erwin, 82145 München (DE); BIRNDORFER, Robert, 82362 Weilheim (DE); ELBS, Norbert, 80797 München (DE)
(74) Vertreter: Schumacher & Willsau
(86) Internationale Anmeldenummer: PCT/DE2009/001586
(87) Internationale Veröffentlichungsnummer: WO 2010/083789

(56) Entgegenhaltungen:
- EP-A1- 0 196 684
- EP-A2- 1 193 094
- EP-A2- 1 745 965
- DE-B3-102008 009 140
- DE-U1-202006 002 018

## Beschreibung

Die Erfindung betrifft einen Windabweiser für eine durch eine Abdeckung verschließ- und freigebbare Dachöffnung in einer Dachhaut eines Fahrzeugs, mit einem Windabweiserarm der gegenüber einem Rahmen der Dachöffnung in einer Längsrichtung verschiebbar und in einer Querrichtung drehbar gelagert ist, wobei ein gegenüber dem Rahmen der Dachöffnung festgelegtes elastisches Element an dem Windabweiserarm angreift und auf diesen eine Kraft in der Längsrichtung ausübt, und wobei ein Arm, der an einem Ende um die Querrichtung drehbar mit dem Windabweiserarm verbunden ist, an dem anderen Ende gegenüber dem Rahmen der Dachöffnung in der Querrichtung drehbar gelagert ist.

Die Erfindung betrifft weiterhin ein Verfahren zum Betätigen eines Windabweisers für eine durch eine Abdeckung verschließ- und freigebbare Dachöffnung in einer Dachhaut eines Fahrzeugs, mit einem Windabweiserarm, der gegenüber einem Rahmen der Dachöffnung in einer Längsrichtung verschiebbar und in einer Querrichtung drehbar gelagert ist, wobei eine permanente Kraft in der Längsrichtung auf den Windabweiserarm ausgeübt wird, wobei die auf den Windabweiserarm in der Längsrichtung wirkende Kraft in eine in Rotationsrichtung des Windabweiserarms um die Querrichtung weisende Drehkraft umgesetzt wird, wobei der Windabweiserarm durch die in Rotationsrichtung weisende Drehkraft aus einer Ruheposition in eine Arbeitsposition bewegt wird und wobei ein Arm (26), der an einem Ende (28) um die Querrichtung (20) drehbar mit dem Windabweiserarm (14) verbunden ist, an dem anderen Ende (28') gegenüber dem Rahmen (16) der Dachöffnung (12) in der Querrichtung (20) drehbar gelagert ist.

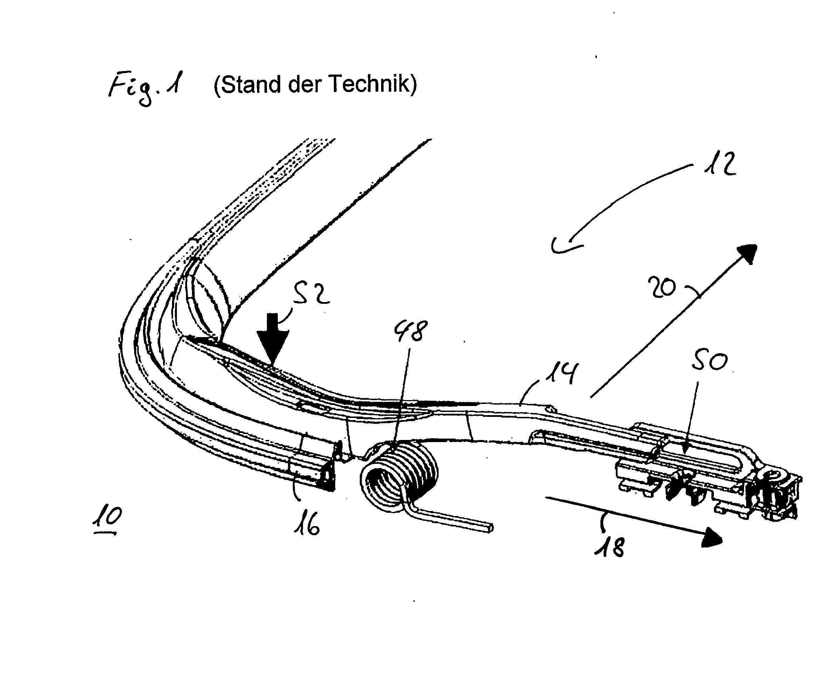

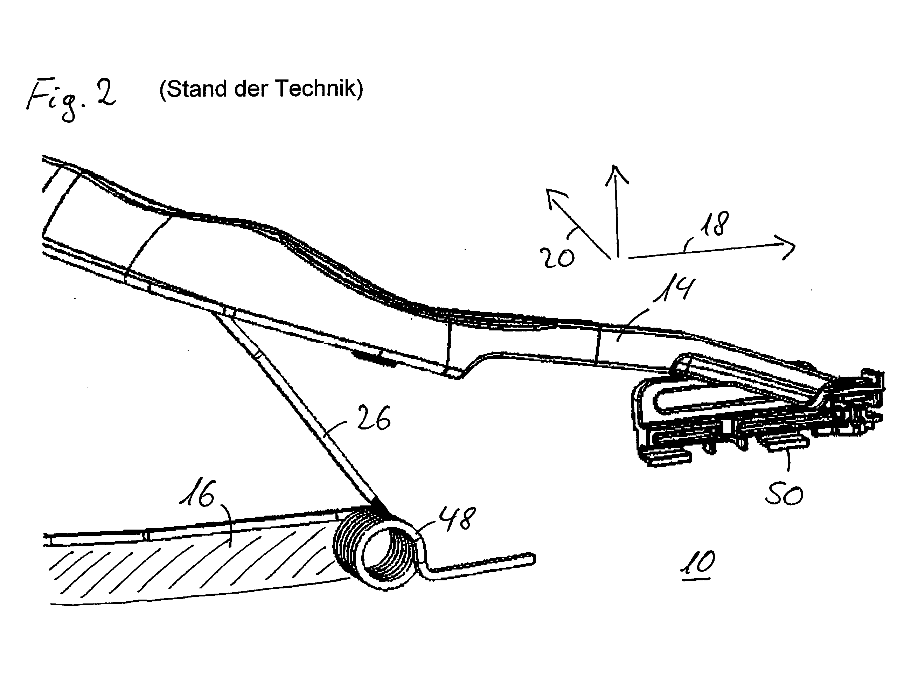

Windabweiser sind weit verbreitete Vorrichtungen, die beispielsweise bei Cabrios und Fahrzeugen mit einem Schiebedach eingesetzt werden. Die Aufgabe der Windabweiser besteht dabei darin eine Wirbelbildung am Rand einer in den Fahrzeuginnenraum führenden Öffnung zu verhindern oder zumindest zu reduzieren, um durch den Wirbel verursachte Geräusche und Luftströmungen im Inneren des Fahrzeugs zu reduzieren, da diese den Fahrkomfort erheblich beeinträchtigen. Herkömmliche Windabweiser, wie sie derzeit verwendet werden, sind beispielsweise in den Figuren 1 und 2 dargestellt.

Figur 1 zeigt einen herkömmlichen Windabweiser 10 in seiner Ruhestellung, während Figur 2 denselben Windabweiser 10 in seiner Aktivstellung, das heißt im geöffneten Zustand, zeigt. Der in den Figuren 1 und 2 dargestellte Windabweiser 10 umfasst einen Windabweiserarm 14, der in einer Lagerung 50 in einer Längsrichtung 18 verschiebbar gelagert ist und gleichzeitig über diese Lagerung 50 um eine Querrichtung 20 senkrecht zu der Längsrichtung 18 drehbar ist. Weiterhin ist ein Federelement 48 vorgesehen, welches wie die Lagerung 50 gegenüber einem Rahmen 16 festgelegt ist, der eine Dachöffnung 12 umfasst. Der Rahmen 16 ist zur besseren Sichtbarkeit des Federelements 48 und der Lagerung 50 nicht vollständig dargestellt. In den Figuren 1 und 2 ist weiterhin nur ein Ausschnitt des Windabweisers 10, nämlich die in Fahrtrichtung des Fahrzeugs linke Seite mit der Lagerung 50 und dem Federelement 48, gezeigt. Es existiert üblicherweise eine weitere Lagerung und ein weiteres Federelement auf der nicht dargestellten anderen Seite des Windabweisers 10, der dann insgesamt eine Seite der Dachöffnung 12 umfasst. Senkrecht zu der Längsrichtung 18 und der Querrichtung 20 wirkt eine Rückstellkraft 52, in der Figur 1 in Bildrichtung von oben, auf den Windabweiserarm 14 und hält diesen in seiner Ruhestellung, das heißt im Wesentlichen in der Ebene des Rahmens 16 beziehungsweise der Dachöffnung 12. Die Rückstellkraft 52 kann beispielsweise durch einen nicht dargestellten Deckel erzeugt werden, der die Dachöffnung 12 verschließt. Beim Öffnen der Dachöffnung 12 nimmt die Rückstellkraft 52 ab und der dargestellte Windabweiser 10 wird automatisch durch das Federelement 48 in die in der Figur 2 dargestellten Aktivposition überführt. Dabei übt das Federelement 48, das als eine Drehfeder ausgeführt und gegenüber dem Rahmen 16 festgelegt ist, aufgrund einer in ihr gespeicherten Federkraft über einen Arm 26 eine Kraft parallel zu der Längsrichtung 18 aus, die den Windabweiserarm 14 in der Lagerung 50 entlang der Längsrichtung 18 verschiebt. Gleichzeitig wird der Windabweiserarm 14 um die Querrichtung 20 gedreht, wobei die Drehachse durch die Lagerung 50 vorgegeben ist. Dabei wird der Windabweiserarm 14 entgegen der auf ihn wirkenden Rückstellkraft 52, in der Bildrichtung von Figur 2 nach oben, über das Niveau des Rahmens 16 hinaus aufgerichtet. Es wird gleichzeitig ein an dem Rahmen 16 und dem Windabweiser 14 befestigtes nicht dargestelltes Windschild in der sich ergebenden Fläche aufgespannt, welches die Wirbelbildung am Rand der Dachöffnung 12 unterdrückt.

Nachteilig bei dieser Konstruktion sind die hohen Federkräfte, die durch das Federelement 48 auf den Windabweiserarm 14 insbesondere in und nahe der Ruhestellung des Windabweiserarms 14 einwirken. Die aufzubringende Rückstellkraft 52 zum Überführen des Windabweisers 10 aus seiner in Figur 2 dargestellten Aktivstellung wächst nämlich aufgrund der in der Längsachse 18 verschiebbaren Drehachse in der Querrichtung 20 des Windabweiserarms 14 bei Annäherung an die Ruhestellung des Windabweiserarms 14 an, da in dieser Position die gesamte von dem Federelement 48 aufgebrachte Kraft durch die Rückstellkraft 52 kompensiert werden muss. Dies ist jedoch bei der Realisierung eines Einklemmschutzes, insbesondere zum Personenschutz, hinderlich, da die beim Überführen des Windabweisers 10 in seine Ruhestellung, das heißt beim Schließen der Dachöffnung 12 aufzubringenden Kräfte anwachsen, was fälschlicherweise mit einem eingeklemmten Objekt zwischen dem Windabweiserarm 14 und dem Rahmen 16 identifiziert werden könnte. Weiterhin ist die Aufstellhöhe des Windabweiserarms 14, das heißt die Höhe, um die sich der Windabweiserarm 14 in seiner Aktivposition in der Bildrichtung von Figur 2 nach oben über den Rahmen 16 erhebt, durch die zur Verfügung gestellte Federkraft des Federelements 48 begrenzt.

Die DE 20 2006 002 018 U1 beschreibt einen gattungsgemäßen Windabweiser mit einem gegenüber einem Fahrzeugdach in einer Längsrichtung verschiebbar und in einer Querrichtung drehbar gelagerten Ausstellglied, wobei ein Ausstellelement, welches an dem Ausstellglied und dem Fahrzeugdach jeweils in der Querrichtung drehbar gelagert ist, und wobei eine Rückstellfeder vorgesehen ist, die einen Ausstellschlitten des Ausstellgliedes in einer Stellung des Windabweisers elastisch gegen die Wirkung eines Betätigungselementes vorspannt.

Die EP 1 193 094 A2 beschreibt einen Windabweiser mit einem an dem Windabweiser drehbar befestigten Ausstellhebel, der an einem Fahrzeug drehbar und in einer Längsrichtung verschiebbar gelagert ist, wobei eine Feder vorgesehen ist, die auf den Ausstellhebel eine permanente Kraft in der Längsrichtung ausübt, um den Windabweiser aufzurichten.

Die EP 1 745 965 A2 zeigt einen Windabweiser für eine Fahrzeugdachöffnung, der mit einem Drehschiebelager am Fahrzeug beweglich befestigt ist, wobei ein drehbar mit dem Windabweiser verbundenes Federelement zum Aufrichten des Windabweisers vorgesehen ist.

Der vorliegenden Erfindung liegt daher die Aufgabe zugrunde, einen Windabweiser bereitzustellen, der insbesondere eine vorteilhafte Ruhestellung aufweist.

Diese Aufgabe wird mit den Merkmalen der unabhängigen Ansprüche gelöst.

Vorteilhafte Ausführungsformen und Weiterbildungen der Erfindung sind in den abhängigen Ansprüchen angegeben.

Die Erfindung baut auf dem gattungsgemäßen Windabweiser dadurch auf, dass der Arm gegenüber dem Rahmen auch in der Längsrichtung verschiebbar gelagert ist. Durch eine zusätzliche Verschiebbarkeit des Arms in der Längsrichtung ist es beispielsweise möglich, den gesamten Windabweiser nach dem Erreichen seiner Ruheposition unter den Rahmen zu bewegen, um diesen in seiner Ruhestellung nicht sichtbar anzuordnen . Durch das Vorsehen eines elastischen Elements, welches eine Kraft in der Längsrichtung auf den Windabweiserarm ausübt, wird in Verbindung mit dem Arm die benötigte Rückstellkraft, insbesondere in der Ruheposition, stark reduziert. Auf diese Weise wird die Detektion eines Einklemmfalls aufgrund der geringeren auf den Windabweiserarm senkrecht zur Längsrichtung und senkrecht zur Querrichtung notwendigen Rückstellkraft vereinfacht. Darüber hinaus wird die erreichbare Aufstellhöhe des Windabweiserarms nicht länger durch die zur Verfügung gestellte Federkraft begrenzt.

Nützlicherweise kann dabei vorgesehen sein, dass der Windabweiserarm in der Längsrichtung durch einen Zapfen in einer Kulisse geführt wird. Auf diese Weise kann die Lagerung des Windabweiserarms gleichzeitig die Verschiebbarkeit in Längsrichtung und die Drehbarkeit um die durch den Zapfen definierte Querrichtung realisieren. Es ist jedoch auch denkbar, dass der Zapfen nicht drehbar in der Kulisse geführt wird und eine separate drehbare Lagerung des Windabweiserarms im Bereich des Zapfens vorgesehen ist.

Weiterhin kann vorgesehen sein, dass der Arm in der Längsrichtung durch einen weiteren Zapfen in einer weiteren Kulisse geführt wird. Auf diese Weise ist insbesondere die Umwandlung der in Längsrichtung auf den Windabweiserarm wirkenden Kraft in eine Drehkraft möglich, die den Windabweiserarm aufrichten kann. Dabei kann die Kraftumsetzung beispielsweise dadurch erreicht werden, dass der Arm in der Kulisse senkrecht zu der durch die Längsrichtung und die Querrichtung definierten Ebene geführt wird oder dass der Arm bei seiner Bewegung in der Kulisse an einem Vorsprung anstößt und durch diesen während seiner Bewegung in der Längsrichtung aufgerichtet wird.

Vorteilhafterweise kann vorgesehen sein, dass die weitere Kulisse mit der Kulisse identisch ist. Dies ermöglicht eine vereinfachte Fertigung, wobei ein eventuell notwendiger Anschlag für den Arm in der Kulisse angeordnet werden sein kann und diese in zwei Abschnitte unterteilt.

Vorzugsweise kann vorgesehen sein, dass das elastische Element als eine Zugfeder ausgeführt ist. Durch eine Zugfeder kann in konstruktiv einfacher Weise benötigte Kraft in Längsrichtung an den Windabweiserarm angelegt werden.

Besonders bevorzugt ist, dass der Arm starr ausgeführt ist. Auf diese Weise kann die zum Aufrichten des Windabweiserarms notwendige Drehkraft in definierter Weise umgesetzt werden.

Alternativ kann auch vorgesehen sein, dass der Arm als Federelement ausgeführt ist. Die zum Aufrichten des Windabweiserarms notwendige Drehkraft wird in diesem Fall durch das Federelement, welches beispielsweise in Form der aus den Figuren 1 und 2 bekannten Drehfeder ausgeführt sein kann, unterstützt.

Es ist auch möglich, dass ein weiteres elastisches Element vorgesehen ist, das nur in einer Ruheposition mit dem Windabweiser in Kontakt steht und dabei eine weitere Kraft auf den Windabweiser ausübt. Auf Grund der in der Ruhestellung des Windabweiserarms kleinen notwendigen Rückstellkraft, kann der Windabweiser während der Fahrt des Fahrzeugs bei geschlossener Dachöffnung beziehungsweise bei in Ruhestellung befindlichem Windabweiser in Schwingung versetzt werden, die sich beispielsweise durch eine unerwünschte Geräuschbildung in Form eines Klapperns des Windabweiserarms, beispielsweise gegen den Rahmen, äußern kann. Das weitere elastische Element verhindert eine derartige unerwünschte Geräuschbildung, indem der Windabweiserarm in seiner Ruheposition durch das weitere elastische Element gegen die Rückstellkraft verspannt wird.

Das gattungsgemäße Verfahren zum Betätigen eines Windabweisers wird erfindungsgemäß dadurch weiterentwickelt, dass der Arm gegenüber dem Rahmen auch in der Längsrichtung verschoben wird.

Auf diese Weise werden die Vorteile und Besonderheiten des erfindungsgemäßen Windabweisers auch im Rahmen eines Verfahrens umgesetzt. Dies gilt auch für die nachfolgend angegebene besonders bevorzugte Ausführungsform des erfindungsgemäßen Verfahrens.

Dieses ist nützlicherweise dadurch weitergebildet, dass durch ein zwischen dem Windabweiserarm und dem Rahmen festgelegtes Federelement eine auf den Windabweiserarm wirkende Zusatzkraft in Rotationsrichtung erzeugt wird.

Die Erfindung wird nun im Bezug auf die begleitenden Zeichnungen anhand einer bevorzugten Ausführungsform beispielhaft erläutert.

Es zeigen:
- Figur 1: einen Ausschnitt eines Windabweisers gemäß dem Stand der Technik in seiner Ruhestellung;
- Figur 2: einen Ausschnitt eines Windabweisers gemäß dem Stand der Technik in seiner Aktivstellung;
- Figur 3: eine seitliche Ansicht eines erfindungsgemäßen Windabweisers in seiner Ruhestellung; und
- Figur 4: eine seitliche Ansicht eines Teils eines erfindungsgemäßen Windabweisers in seiner Aktivstellung.

In den folgenden Zeichnungen bezeichnen gleiche Bezugszeichen gleiche oder gleichartige Teile.

Die Figuren 1 und 2, die einen Windabweiser gemäß dem Stand der Technik darstellen, wurden bereits beschrieben.

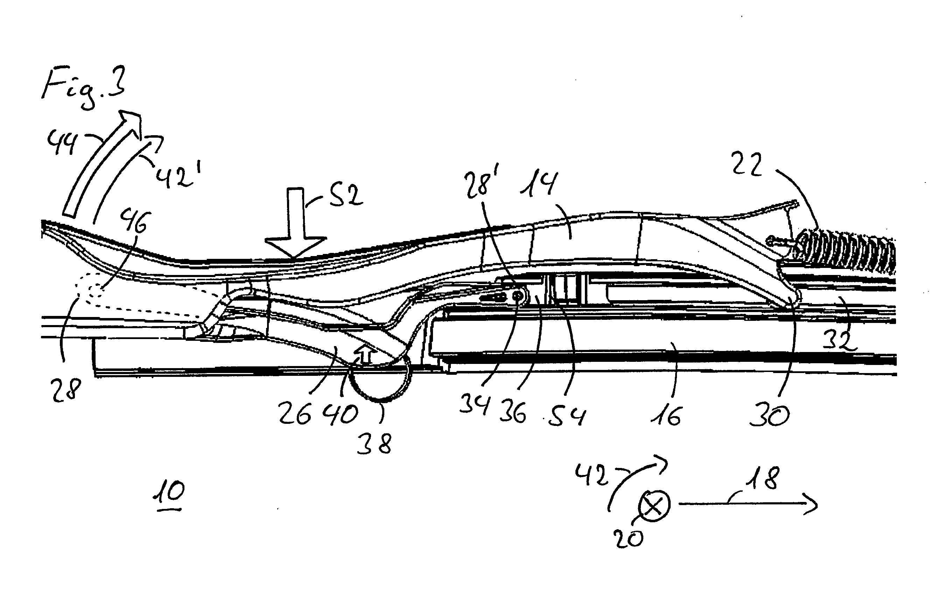

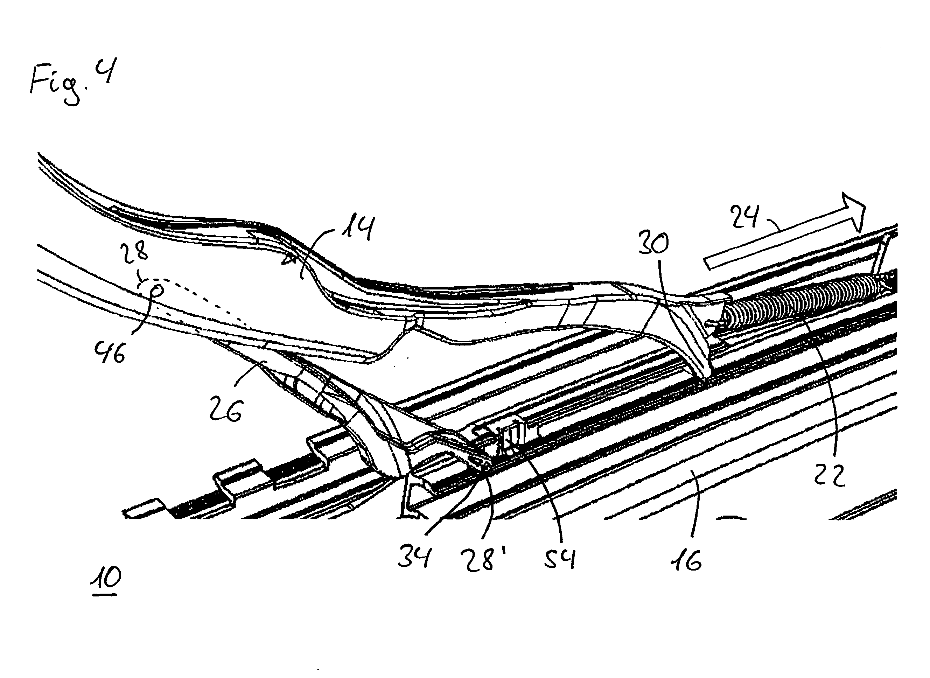

Figur 3 zeigt eine seitliche Ansicht eines erfindungsgemäßen Windabweisers in seiner Ruhestellung. Von dem dargestellten Windabweiser 10 ist im Wesentlichen eine erfindungsgemäße Aufstellmechanik, das heißt insbesondere ein Teil des Windabweiserarms 14, der Arm 26 sowie ein elastisches Element 22, welches als Zugfeder ausgeführt ist, und ein Teil des Rahmens 16 sichtbar. Es ist aus Symmetriegründen offensichtlich, dass ein weiterer beispielsweise identischer in dieser Ansicht nicht sichtbarer Teil der Windabweisermechanik notwendig ist, die bei entsprechender Auslegung der sichtbaren Teile jedoch eventuell auf den Windabweiserarm mit seiner Lagerung beschränkt sein kann. Zur besseren Orientierung ist die Längsrichtung 18 und senkrecht dazu, in die Bildebene weisend, die Querrichtung 20 sowie eine Rotationsrichtung 42 beziehungsweise 42' um die Querrichtung 20 eingezeichnet, wobei die Drehachse der Rotationsrichtung 42' des Windabweiserarms 14 um einen Zapfen 30 läuft. Der dargestellte Windabweiser 10 umfasst einen Windabweiserarm 14, der über den Zapfen 30 in einer Kulisse 32 an dem Rahmen 16 in Längsrichtung 18 verschiebbar und in Querrichtung 20 drehbar gelagert ist. Weiterhin greift ein als Zugfeder ausgeführtes elastisches Element 22, das gegenüber dem Rahmen 16 festgelegt ist, an dem Windabweiserarm 14 an und vermittelt eine Kraft 24 in Längsrichtung 18 auf den Windabweiserarm 14. Die Kraft in Längsrichtung 18 kann dabei insbesondere permanent an dem Windabweiserarm 14 angreifen und beispielsweise auch konstant sein oder konstant gehalten werden. Es wirkt also auch in der Ruhestellung des Windabweisers 10 eine Kraft in Längsrichtung 18 auf den Windabweiserarm. Durch das elastische Element 22 erzeugte Kraftkomponenten, die nicht in Längsrichtung 18 weisen, können von der Kulisse 32 aufgenommen werden oder zum Anheben des Windabweiserarms 14 verwendet werden. Weiterhin ist der Windabweiserarm 14 über eine Lagerung 46 mit einem Ende 28 des Arms 26 drehbar gelagert, wobei ein anderes Ende 28' des Arms 26 über einen weiteren Zapfen 34 in einer weiteren Kulisse 36 mit einem Anschlag 54 in Längsrichtung 18 gelagert sein kann, wobei dann gleichzeitig die Drehbarkeit des Arms 26 gegenüber dem Rahmen 16, beispielsweise durch Drehbarkeit um den weiteren Zapfen 34, gewährleistet ist. Durch die Verschiebbarkeit des Arms 26 gegenüber dem Rahmen 16 ist auch der Windabweiserarm 14 gegenüber dem Rahmen 16 in der Längsrichtung 18 verschiebbar. Daher kann der gesamte Windabweiser 10 dann in seiner Ruhestellung zusätzlich gegenüber dem Rahmen 16 in der Längsrichtung 18 verschoben werden. Die Verschiebbarkeit des Arms 26 in der weiteren Kulisse 36 ist optional und kann auch entfallen. Weiterhin kann die weitere Kulisse 36 mit der Kulisse 32 identisch sein, was die Fertigung des Rahmens 16 vereinfacht. In diesem Fall kann der Anschlag 54 die Kulisse 32 in zwei Abschnitte unterteilen. Die Kulissen 32, 36 können je nach Bedarf beispielsweise als einfache Führungsschienen ausgeführt sein. In der dargestellten Ruhestellung des Windabweisers 10 steht der Arm 26 des Windabweisers 10 mit einem weiteren elastischen Element 38 in Kontakt, welches eine weitere Kraft 40 entgegen der Rückstellkraft 52 auf den Windabweiserarm 14 ausübt und den Windabweiser 10 auf diese Weise in seiner Ruhestellung verspannt. Wenn die Rückstellkraft 52 klein genug wird, zum Beispiel durch das Öffnen einer Dachöffnung entfällt, wird der Windabweiser 10 aus der in Figur 3 dargestellten Ruhestellung in die in Figur 4 dargestellte Aktivposition überführt. Dabei wird zunächst der Windabweiserarm 14 durch das elastische Element 22 in Längsrichtung 18 gezogen, wobei der Windabweiserarm 14 in der Kulisse 32 und über den Windabweiserarm 14 auch der Arm 26 in der weiteren Kulisse 36 geführt werden. Dabei entsteht eine Drehkraft 44, die geeignet ist, den Windabweiserarm 14 in der Rotationsrichtung 42' des Windabweiserarms 14 um den Zapfen 30 zu drehen und dabei gegenüber dem Rahmen 16 aufzurichten. Die Drehkraft 44 kann beispielsweise durch entsprechende Ausgestaltung der weiteren Kulisse 36 mit einer Bewegungskomponente senkrecht zu der Längsrichtung 18 und der Querrichtung 20 und/oder durch den Anschlag 54 oder durch die Formgebung des Arms 26 selbst erzeugt werden, der bei seiner Bewegung in der Längsrichtung 18 an einem Vorsprung des Rahmens 16 anstößt und dabei aufgerichtet wird. Die von dem elastischen Element 22 erzeugte Kraft 24 in Längsrichtung 18 kann auch beim Aufrichten des Windabweiserarms 14 parallel zur Längsrichtung 18 bleiben. Auf diese Weise wächst der Anteil der Kraft 24, der in eine Drehkraft 44 umgesetzt wird, mit zunehmender Aufrichtung des Windabweisers 10 aus seiner Ruhestellung. Es ist denkbar, dass der Arm 26 als ein Federelement ausgeführt ist, welches das Aufrichten des Windabweiserarms 14 zusätzlich unterstützt.

Figur 4 zeigt einen Ausschnitt eines erfindungsgemäßen Windabweisers in seiner Aktivstellung. Der aus Figur 3 bekannte Windabweiser 10 ist in der Figur 4 in seiner Aktivstellung dargestellt. Der Windabweiserarm 14 ist nach dem Wegfall der Rückstellkraft 52 durch das elastische Element 22 aufgrund der Kraft 24 über den Arm 26 gegenüber dem Rahmen 16 aufgerichtet, wobei das weitere Ende 28' des Arms 26 an dem Anschlag 54 anliegt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

| | |
|---|---|
| 10 | Windabweiser |
| 12 | Dachöffnung |
| 14 | Windabweiserarm |
| 16 | Rahmen |
| 18 | Längsrichtung |
| 20 | Querrichtung |
| 22 | elastisches Element |
| 24 | Kraft |
| 26 | Arm |
| 28 | Ende |
| 28' | anderes Ende |
| 30 | Zapfen |
| 32 | Kulisse |
| 34 | weiterer Zapfen |
| 36 | weitere Kulisse |
| 38 | weiteres elastisches Element |
| 40 | weitere Kraft |
| 42 | Rotationsrichtung |
| 42' | Rotationsrichtung des Windabweiserarms |
| 44 | Drehkraft |
| 46 | Lagerung |
| 48 | Federelement |
| 50 | Lagerung |
| 52 | Rückstellkraft |
| 54 | Anschlag |

## Patentansprüche

1. Windabweiser (10) für eine durch eine Abdeckung verschließ- und freigebbare Dachöffnung (12) in einer Dachhaut eines Fahrzeugs, mit einem Windabweiserarm (14) der gegenüber einem Rahmen (16) der Dachöffnung (12) in einer Längsrichtung (18) verschiebbar und in einer Querrichtung (20) drehbar gelagert ist,
- wobei ein gegenüber dem Rahmen (16) der Dachöffnung (12) festgelegtes elastisches Element (22) an dem Windabweiserarm (14) angreift und auf diesen eine Kraft (24) in der Längsrichtung (18) ausübt, und
- wobei ein Arm (26), der an einem Ende (28) um die Querrichtung (20) drehbar mit dem Windabweiserarm (14) verbunden ist, an dem anderen Ende (28') gegenüber dem Rahmen (16) der Dachöffnung (12) in der Querrichtung (20) drehbar gelagert ist,
**dadurch gekennzeichnet, dass** der Arm (26) gegenüber dem Rahmen (16) auch in der Längsrichtung (18) verschiebbar gelagert ist:

2. Windabweiser (10) nach Anspruch 1, **dadurch gekennzeichnet, dass** der Windabweiserarm (14) in der Längsrichtung (18) durch einen Zapfen (30) in einer Kulisse (32) geführt wird.

3. Windabweiser (10) nach Anspruch 1 oder 2, **dadurch gekennzeichnet, dass** der Arm (26) in der Längsrichtung (18) durch einen weiteren Zapfen (34) in einer weiteren Kulisse (36) geführt wird.

4. Windabweiser (10) nach Anspruch 3, **dadurch gekennzeichnet, dass** die weitere Kulisse (36) mit der Kulisse (32) identisch ist.

5. Windabweiser (10) nach einem der vorhergehenden Ansprüche, **dadurch gekennzeichnet, dass** das elastische Element (22) als eine Zugfeder ausgeführt ist.

6. Windabweiser (10) nach einem der vorhergehenden Ansprüche, **dadurch gekennzeichnet, dass** der Arm (26) starr ausgeführt ist.

7. Windabweiser (10) nach einem der Ansprüche 1 bis 5, **dadurch gekennzeichnet, dass** der Arm (26) als Federelement (48) ausgeführt ist.

8. Windabweiser (10) nach einem der vorhergehenden Ansprüche, **dadurch gekennzeichnet, dass** ein weiteres elastisches Element (38) vorgesehen ist, das nur in einer Ruheposition mit dem Windabweiser (10) in Kontakt steht und dabei eine weitere Kraft (40) auf den Windabweiser (10) ausübt.

9. Verfahren zum Betätigen eines Windabweisers (10) für eine durch eine Abdeckung verschließ- und freigebbare Dachöffnung (12) in einer Dachhaut eines Fahrzeugs, mit einem Windabweiserarm (14), der gegenüber einem Rahmen (16) der Dachöffnung (12) in einer Längsrichtung (18) verschiebar und in einer Querrichtung (20) drehbar gelagert ist,
- wobei eine permanente Kraft (24) in der Längsrichtung (18) auf den Windabweiserarm (14) ausgeübt wird,
- wobei die auf den Windabweiserarm (14) in der Längsrichtung (18) wirkende Kraft (24) in eine in Rotationsrichtung (42) des Windabweiserarms (14) um die Querrichtung (20) weisende Drehkraft (44) umgesetzt wird,
- wobei der Windabweiserarm (14) durch die in Rotationsrichtung (42) weisende Drehkraft (44) aus einer Ruheposition in eine Arbeitsposition bewegt wird, und - wobei ein Arm (26), der an einem Ende (28) um die Querrichtung (20) drehbar mit dem Windabweiserarm (14) verbunden ist, an dem anderen Ende (28') gegenüber dem Rahmen (16) der Dachöffnung (12) in der Querrichtung (20) drehbar gelagert ist,
**dadurch gekennzeichnet, dass** der Arm (26) gegenüber dem Rahmen (16) auch in der Längsrichtung (18) verschoben wird.

10. Verfahren nach Anspruch 9, **dadurch gekennzeichnet, dass** durch ein zwischen dem Windabweiserarm (14) und dem Rahmen (16) festgelegtes Federelement (48) eine auf den Windabweiserarm (14) wirkende Zusatzkraft (46) in Rotationsrichtung (42) erzeugt wird.

## Claims

1. Wind deflector (10) for a roof opening (12) in a roof skin of a vehicle, which roof opening can be closed and opened up by a covering, with a wind deflector arm (14) which is mounted displaceably in a longitudinal direction (18) in relation to a frame (16) of the roof opening (12) and rotatably in a transverse direction (20),
- wherein an elastic element (22) which is fixed in relation to the frame (16) of the roof opening (12) acts on the wind deflector arm (14) and exerts a force (24) in the longitudinal direction (18) on the latter, and
- wherein an arm (26) which is connected to the wind deflector arm (14) at one end (28) so as to be rotatable about the transverse direction (20) is mounted at the other end (28') so as to be rotatable in the transverse direction (20) in relation to the frame (16) of the roof opening (12),
**characterized in that** the arm (26) is also mounted displaceably in the longitudinal direction (18) in relation to the frame (16).

2. Wind deflector (10) according to Claim 1, **characterized in that** the wind deflector arm (14) is guided in the longitudinal direction (18) by means of a pin (30) in a guide slot (32).

3. Wind deflector (10) according to Claim 1 or 2, **characterized in that** the arm (26) is guided in the longitudinal direction (18) by means of a further pin (34) in a further guide slot (36).

4. Wind deflector (10) according to Claim 3, **characterized in that** the further guide slot (36) is identical to the guide slot (32).

5. Wind deflector (10) according to one of the preceding claims, **characterized in that** the elastic element (22) is in the form of a tension spring.

6. Wind deflector (10) according to one of the preceding claims, **characterized in that** the arm (26) is formed rigidly.

7. Wind deflector (10) according to one of Claims 1 to 5, **characterized in that** the arm (26) is in the form of a spring element (48).

8. Wind deflector (10) according to one of the preceding claims, **characterized in that** a further elastic element (38) is provided, said element being in contact only in an inoperative position with the wind deflector (10) and exerting a further force (40) on the wind deflector (10).

9. Method for actuating a wind deflector (10) for a roof opening (12) in a roof skin of a vehicle, which roof opening can be closed and opened up by a covering, with a wind deflector arm (14) which is mounted displaceably in a longitudinal direction (18) in relation to a frame (16) of the roof opening (12) and rotatably in a transverse direction (20),
- wherein a permanent force (24) is exerted on the wind deflector arm (14) in the longitudinal direction (18),
- wherein the force (24) acting on the wind deflector arm (14) in the longitudinal direction (18) is converted into a rotational force (44) pointing in the direction of rotation (42) of the wind deflector arm (14) about the transverse direction (20),
- wherein the wind deflector arm (14) is moved from an inoperative position into a working position by means of the rotational force (44) pointing in the direction of rotation (42), and
- wherein an arm (26) which is connected to the wind deflector arm (14) at one end (28) so as to be rotatable about the transverse direction (20) is mounted at the other end (28') so as to be rotatable in the transverse direction (20) in relation to the frame (16) of the roof opening (12),
**characterized in that** the arm (26) is also displaced in the longitudinal direction (18) in relation to the frame (16).

10. Method according to Claim 9, **characterized in that** an additional force (46) acting on the wind deflector arm (14) is produced in the direction of rotation (42) by means of a spring element (48) fixed between the wind deflector arm (14) and the frame (16).

## Revendications

1. Déflecteur de vent (10) pour une ouverture de toit (12) située dans une toiture de véhicule et pouvant être fermée et libérée par le biais d'un cache, avec un bras de déflecteur de vent (14) disposé de façon à pouvoir coulisser dans une direction longitudinale (18) par rapport à un cadre (16) de l'ouverture de toit (12) et à pouvoir pivoter dans une direction transversale (20) ;
- un élément élastique (22) fixe par rapport au cadre (16) de l'ouverture de toit (12) s'appliquant au niveau du bras de déflecteur de vent (14) et exerçant une force (24) sur celui-ci dans la direction longitudinale (18) ; et
- un bras (26) étant relié au bras de déflecteur de vent (14) au niveau d'une extrémité (28) de façon à pouvoir pivoter autour de la direction transversale (20) et étant disposé de façon à pouvoir pivoter dans la direction transversale (20) par rapport au cadre (16) de l'ouverture de toit (12) au niveau de l'autre extrémité (28') ;
**caractérisé en ce que** le bras (26) est disposé de façon à pouvoir coulisser également dans la direction longitudinale (18) par rapport au cadre (16).

2. Déflecteur de vent (10) selon la revendication 1, **caractérisé en ce que** le bras de déflecteur de vent (14) est guidé dans la direction longitudinale (18) dans une glissière (32) par le biais d'un tenon (30).

3. Déflecteur de vent (10) selon la revendication 1 ou 2, **caractérisé en ce que** le bras (26) est guidé dans la direction longitudinale (18) dans une glissière (36) supplémentaire par le biais d'un tenon supplémentaire (34).

4. Déflecteur de vent (10) selon la revendication 3, **caractérisé en ce que** la glissière (36) supplémentaire est identique à la glissière (32).

5. Déflecteur de vent (10) selon l'une quelconque des revendications précédentes, **caractérisé en ce que** l'élément élastique (22) prend la forme d'un ressort de traction.

6. Déflecteur de vent (10) selon l'une quelconque des revendications précédentes, **caractérisé en ce que** le bras (26) est réalisé de façon rigide.

7. Déflecteur de vent (10) selon l'une quelconque des revendications 1 à 5, **caractérisé en ce que** le bras (26) prend la forme d'un élément de ressort (48).

8. Déflecteur de vent (10) selon l'une quelconque des revendications précédentes, **caractérisé en ce qu'**un élément élastique (38) supplémentaire est prévu qui n'est en contact avec le déflecteur de vent (10) que dans une position de repos et exerce en l'occurrence une force (40) supplémentaire sur le déflecteur de vent (10).

9. Procédé d'actionnement d'un déflecteur de vent (10) pour une ouverture de toit (12) située dans une toiture de véhicule et pouvant être fermée et libérée par le biais d'un cache, avec un bras de déflecteur de vent (14) disposé de façon à pouvoir coulisser dans une direction longitudinale (18) par rapport à un cadre (16) de l'ouverture de toit (12) et à pouvoir pivoter dans une direction transversale (20) ;
- une force permanente (24) s'exerçant sur le bras de déflecteur de vent (14) dans la direction longitudinale (18) ;
- la force (24) agissant sur le bras de déflecteur de vent (14) dans la direction longitudinale (18) étant convertie en une force de rotation (44) orientée dans une direction de rotation (42) du bras de déflecteur de vent (14) autour de la direction transversale (20) ;
- le bras de déflecteur de vent (14) étant déplacé d'une position de repos à une position de travail à travers la force de rotation (44) orientée dans la direction de rotation (42) ; et
- un bras (26) étant relié au bras de déflecteur de vent (14) au niveau d'une extrémité (28) de façon à pouvoir pivoter autour de la direction transversale (20) et étant disposé de façon à pouvoir pivoter par rapport au cadre (16) de l'ouverture de toit (12) dans la direction transversale (20) au niveau de l'autre extrémité (28') ;
**caractérisé en ce que** le bras (26) est coulissé également dans la direction longitudinale (18) par rapport au cadre (16).

10. Procédé selon la revendication 9, **caractérisé en ce qu'**une force supplémentaire (46) s'exerçant sur le bras de déflecteur de vent (14) dans la direction de rotation (42) est produite par le biais d'un élément de ressort (48) fixé entre le bras de déflecteur de vent (14) et le cadre (16).
